# EUROPEAN PATENT APPLICATION

(11) **EP 0 923 863 A1**
(43) Date of publication of application: **23.06.1999**
(21) Application number: 98204224.4
(22) Date of filing: 14.12.1998
(51) Int. Cl.: A01K 97/02, A01K 91/02

(54) **Feeding vessel**

(30) Priority: 15.12.1997 NL 1007791
(71) Applicant: J & G Products B.V., 8263 BA Kampen (NL)
(72) Inventor: La-Faille, Jacobus Albertus Petrus, 8014 LB Zwolle (NL)
(74) Representative: Ferguson, Alexander

(57) **Abstract**

Feeding boat (1) for dispersing bait or food for fish over a water surface (7), which feeding boat (1) consists of a hull (2) and can be moved over the water surface (7) along a desired track by means of remote controlled steering means, which feeding boat (1) furthermore comprises at least one compartment for storing the food, and which contents of the compartment can be discharged into the water at a desired location. The compartment consists of two containers (3) with an open side, which containers (3) are arranged on both sides of the hull (2), and which with respect to the hull (2) move continuously variable between a first position and a second position during which the food can flow from the container (3). The containers (3) are provided with a ventilation opening (16), which has been arranged near the axis of rotation at the upper side of a container (3).

## Description

The invention relates to a feeding boat for dispersing bait or food for fish over a water surface, which feeding boat comprises a primary hull and can be moved over the water surface along a desired track by means of driving means and preferably by means of remote controlled steering means, which feeding boat furthermore comprises at least one compartment for storing the food, and which contents of the compartment can be discharged into the water at a desired location.

Such feeding boats are used in sport fishing in order to thus disperse bait in fishing waters that are difficult to reach for instance fishing waters in a protected nature reserve which may not be entered by unauthorized persons or an area where there are fish that prefer to stay at locations far away from a bank. The feeding boats transport a quantity of bait, for instance grains of maize, to the area to be fished, after which with the help of for instance radiographic control the bait is discharged. These known feeding boats in many cases comprise two compartments which can be discharged independently from each other.

The feeding boats known up until now, however, have a number of drawbacks. Most feeding boats are not very stable and capsize quickly at little surge already. The bait stored in the feeding boat is always discharged at once from the compartment, because of which all the bait ends up in a small area only and does not disperse. Moreover it appeared that the food sometimes sticks, and therefore does not flow from the compartment. Furthermore the compartments of these known feeding boats are provided with an opening which is oriented downwards, which cannot be leak-proof and as a result these known boats cannot move live bait in the form of live fish.

The object of the invention is a feeding boat of a simple construction which has a number of advantages over the feeding boats that have been known until now, that is to say a feeding boat which is stable and can therefore be used at heavy wave action; which can disperse the bait over a larger area or track; which can bring live bait to a desired fishing spot in the waters to be fished.

The object of the invention is obtained with a feeding boat of the kind described in the preamble, in that the compartment for storing the food or bait is formed by at least one secondary hull arranged outside of the primary hull, which secondary hull is provided with a discharge opening for direct discharge of the food or bait to the water.

The secondary hull provides extra stability and buoyancy to the device, in which as a result of the separation of storage and discharge - in the one hull - and control means - in the other hull - a simple construction is obtained which is not too prone to failure.

It is noted that from SU-A-387680 a feeding boat for fish ponds is known, which comprises a main hull and two floating food containers which are connected to it on both sides, in which a suction pump is arranged in the main hull for sucking food from the food containers by means of suction pipes and discharging food from the main hull to the water.

Preferably the secondary hull is connected to the primary hull for rotation about a horizontal axis. Because of that the position of the secondary hull and as a result the discharge opening may vary in relation to the water surface, for instance with an inactive position, in which no feeding takes place, and one or several feeding positions.

Preferably the discharge opening in sailing direction is situated behind the rotatable connection. The discharge of food then takes place at a lee side of the secondary hull, as a result of which the (relative) longitudinal flow of the water can be used for taking along food and its dispersion.

Preferably the centre of gravity of the secondary hull in the inactive position is situated behind the rotatable connection, as a result of which the discharge opening will of its own accord sway to the water at unlocking.

Preferably the device according to the invention comprises means for holding up the secondary hull in an inactive position, in which no feeding takes place, and remote controlled unlocking means for deactivating the means for holding up.

Preferably the secondary hull in the unlocked position can be rotated freely in relation to the primary hull. During the discharge of the food and the sailing the secondary hull will of its own accord be able to tilt along to one or more feeding positions. The bait can then without losing it be brought to the desired location and subsequently be gradually discharged along a track. The degree of tilting here can be influenced by adjusting the speed of sailing: at lowering the speed of sailing the secondary hull may take a more vertical position or a certain position may be maintained despite the fact that food has already been discharged.

In a preferred embodiment of the feeding boat according to the invention the feeding boat is provided with two of such secondary hulls for containing food placed on both sides of the hull, as a result of which a kind of trimaran is formed.

Preferably the containers can be unlocked independently from each other. As a result of this it is possible to empty both containers independently from each other and live fish can easily be planted at two locations.

Alternatively the device is adapted for locking the secondary hull(s) in several positions. Furthermore by way of alternative a driving gear for the rotatable connection can be provided, to set and keep the secondary hull in a certain position in a controlled manner, independent from the speed of sailing.

The food can easily be sailed to the desired feeding location, without large forces being exerted on the rotary shaft, with which the secondary hulls are connected to the primary hull. In this way - possibly - a relatively weak servomotor could also be used for having the secondary hull tilted, as during discharging the food nearly no forces at all are exerted on the rotary shaft.

Because the secondary hulls or containers are situated on both sides of the hull, the feeding boat can be loaded in a well-balanced manner. Moreover this permits to control the boat such that, after the first container has been emptied and has left a food trail behind, subsequently a track is sailed which is substantially transverse to the food trail formed first, in which the second container is emptied and forms a second food trail. In this way a cross-shaped pitch is realized, in which as many fish as possible can be lured.

Preferably the secondary hulls consist of a cylindrical member with a - preferably open - discharge end and a closed extremity, which tube member in the inactive position is at an angle to the hull, the discharge end being directed towards the rear side of the feeding boat.

Preferably the -preferably conical- closed end substantially has a shape which more or less corresponds to the bow of a boat and which in the inactive position of the container is directed towards the front side of the feeding boat. Preferably the closed extremity is turned upwards in relation to the rest of the container concerned. After discharge the tube members act as floats, as a result of which the buoyancy and the stability of the feeding boat are increased, all the more if the discharge side in the feeding position is below water level, and the shape of the feeding boat so the hull and both secondary hulls, is therefore optimally streamlined.

Preferably the cross-section of each tube member is oval.

The discharge end of the secondary hull is preferably in the second position or further position as well below water level, preferably completely.

Furthermore the secondary hulls preferably comprise a vent opening which is situated above water level, that is when the feeding boat is in the water. When after discharge of the bait and during sailing back the secondary hulls are placed in the second position, so the one in which the discharge opening, in particular as open side, is under water, air will slowly flow through this opening in and out of the secondary hulls during movement, as a result of which the water can only flow slowly in and out of said hull too and consequently a counter-balance is formed when the feeding boat starts to rock because of the wave action; the stability and the buoyancy of the feeding boat is very large as a result of this.

When the secondary hulls are detachable the primary hull and secondary hulls independent from each other's use can be transported in a compact manner. The separate hulls can be cleaned independently in a simple manner and if necessary be replaced.

Preferably, at their discharge ends the secondary hulls are provided with a weight that can be changed and selected, so that tilting is promoted and the lifting forces that are generated by the water can be compensated and the orientation of the secondary hull in the unlocked position is less subject to change. This could be of importance in particular in case food has been discharged and the secondary hull therefore has become lighter. The weight then ensures that the secondary hull takes a certain, desired tilted position after all, whereas the speed of sailing need not be lowered too much.

The invention will further be elucidated on the basis of the drawings, in which:
Figure 1 shows a feeding boat with two containers according to the invention filled with food or bait;
Figure 2 shows a feeding boat according to figure 1 during discharge of the bait from one of the containers;
Figure 3 shows a feeding boat according to figures 1 and 2 after discharge of the bait;
Figure 4 shows a schematical longitudinal cross-section of the feeding boat according to figure 1 along line IV-IV of figure 5;
Figure 5 shows a rear view of the hull of a feeding boat according to figure 1;
Figure 6 shows a side view of a container of a feeding boat according to figure 1;
Figure 7 shows a top view of a container of a feeding boat according to figure 1.

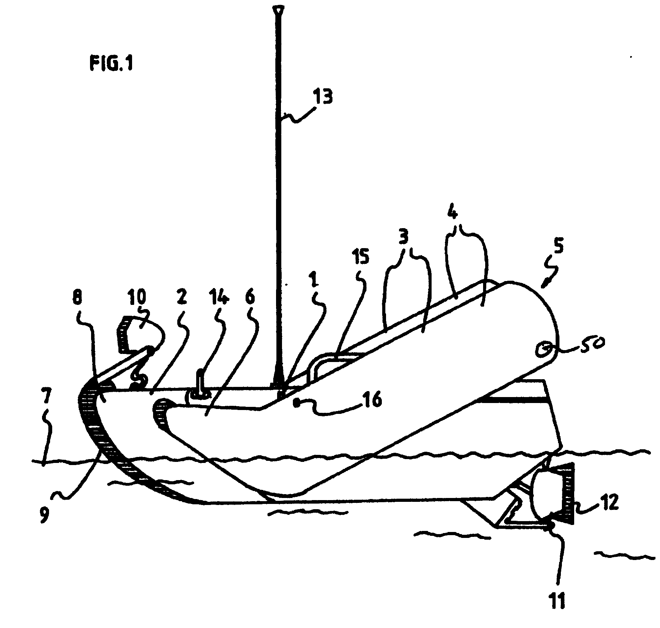

Figure 1 shows a feeding boat 1 according to the invention, which consists of a (primary) hull 2 with a secondary hull on both sides, hereafter to be called container 3, which container 3 may for instance contain food, bait, such as thick mash, maize etc. or a live fish, which has already been attached to a fishing line for fishing fish of prey such as pikes or the like. Both containers 3 consist of a cylindrical or oval-shaped tube member 4, which on the one side or top side is open and on the other side or bottom side is closed off with a part 6, of which the shape is somewhat similar to the bow of a boat. In figure 1 both containers have been shown in the position in which the containers are filled with food and in the position that the containers in relation to the hull are fastened by means of a locking. The hull 2 is closed entirely and has a substantially cylindrical shape with a pointed tapering bow 8 which furthermore is provided with a bow fin 9. On the upper side a head light or bow light 10 is placed on the front of the bow 8, so that the feeding boat can also be used easily at night or in dark places. At the rear side the feeding boat is provided with a screw 11 and a rudder 12. For receiving radiographic signals for controlling the various functions of the feeding boat, an antenna 13 has been arranged at the upper side of the hull 2. A sailing lamp 14 and a carrying handle 15 have also been arranged at the upper side of the hull 2. The carrying handle 15 serves to be able to easily lift the feeding boat from the water and to carry it outside of the water. Near their axis of rotation the containers 3 are each provided with a small opening 16, a so-called vent opening, which vent opening, after the container has been attached to the boat, is located above the axis of rotation or tilting of the container.

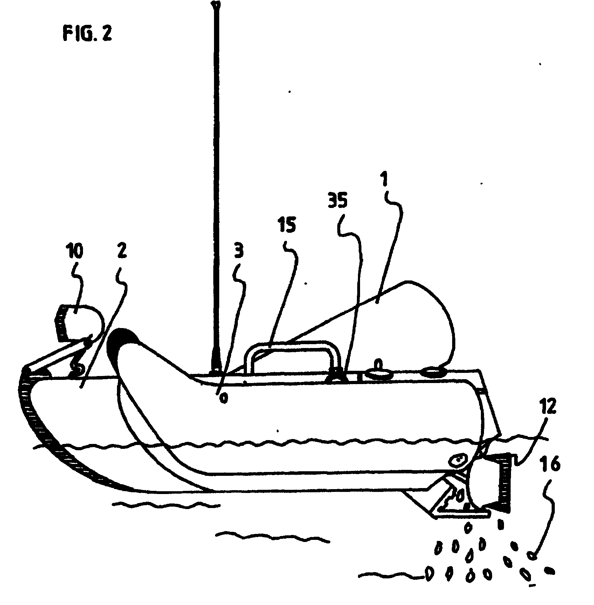

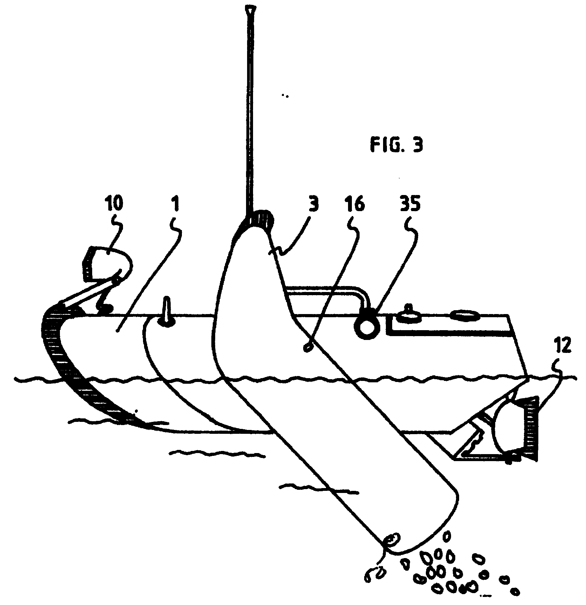

The figures 2 and 3 show the same feeding boat 1 as in figure 1 however, one of the containers 3 or both, respectively, being shown in a different position. In figure 2 one of the containers 3 is shown tilted at an angle so that it is in a position halfway a first tilted position as shown in figure 1, and a second further tilted position, as shown in figure 3. It will be understood that further positions are possible, such as a vertical position of the container in which the open end takes a lowest position. In the situation of figure 2 the other container 3 on the other side of the hull 2 is still in the first position, oriented somewhat upwardly inclined. In the first tilted position the container 3 is in such a position that the food or bait 16 gradually flows out of the container 3, so that during the sailing of the boat an elongated food trail may be realized. Due to diminution of weight the container 3 will tend to a less tilted position. This can be counteracted by lowering the speed of sailing and/or weighting the discharge end (see below).

After the first container 3 has been emptied, the feeding boat 1 can for instance be controlled such that a track is covered which is substantially transverse to the food trail formed and in which the second container 3 is emptied. In this way a cross-shaped pitch is realized, which lures as many fish as possible. In figure 3 the feeding boat is shown in which both containers 3 are in the second, further tilted position. The open extremity 5 of the containers 3 is completely under water here. The vent hole 16 however is entirely above the water surface.

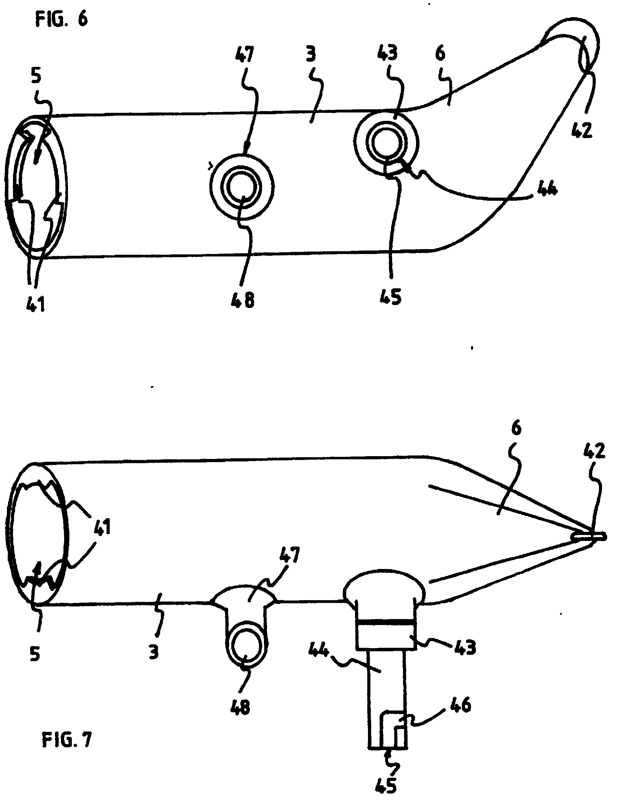

At the open end of the containers detachable and changeable weights 41 (see figures 6 and 7) are arranged, with which tilting is promoted and lifting forces generated by sailing are compensated and complete emptying of the container is promoted.

With the help of locking means such as a remote-controlled pen, which engages in an eye plate on the containers 3, the containers 3 can be held up in the first position. When feeding has to take place the pen is operated and it slides out of the eye plate in order to tilt the container concerned free about the rotary shaft 33 (see further), at least over a certain angle, to a feeding position (figures 2 and 3), in which food can come out of the discharge opening. This tilting can also possibly be controlled by a servomotor.

In the first or inactive position, when the containers 3 are filled with food the open extremity 5 is situated at ample distance above the water surface 7. In the position shown in figure 3, when the containers 3 have completely been emptied, the open extremity 5 is entirely under water. Because a vent hole 16 has been arranged in each container the container can partially be filled with water after it has been tilted in the position in which the open extremity is under water. This position can also be completely vertical. In this way, when the containers are in the tilted position, on the one hand the remainders of the food are very well rinsed entirely out of the container with the help of the water streaming in and on the other hand the balance of the feeding boat is strongly improved, because the containers serve as floaters which are partially filled with water. Because of the streamlined front of each of the containers, the resistance will be low during sailing.

As a result the containers 3 ensure a large stability so that the feeding boat will not easily capsize even at great wave activity. When the feeding boat 1 sails with the containers in the lowest tilted position, then the water as a result of the speed of the feeding boat will flow out of the containers, because the air can flow in and out of the containers through the vent openings 16. Because the vent openings are small the water level in the containers will not rapidly change, because of which the stability of the feeding boat 1 is further increased. The vent openings 16 moreover ensure that in the filled position of the containers, with live bait and therefore with water, a surplus of water can evade and therefore it is prevented that too large a weight has to be carried along. Furthermore the vent openings ensure that lowering the containers can take place easily, as the air which is compressed by the rising water in the containers can evade through the openings. Finally the vent openings ensure that the flowing out of the food out of the open ends of the containers is easy, as an underpressure above the food in the containers is prevented.

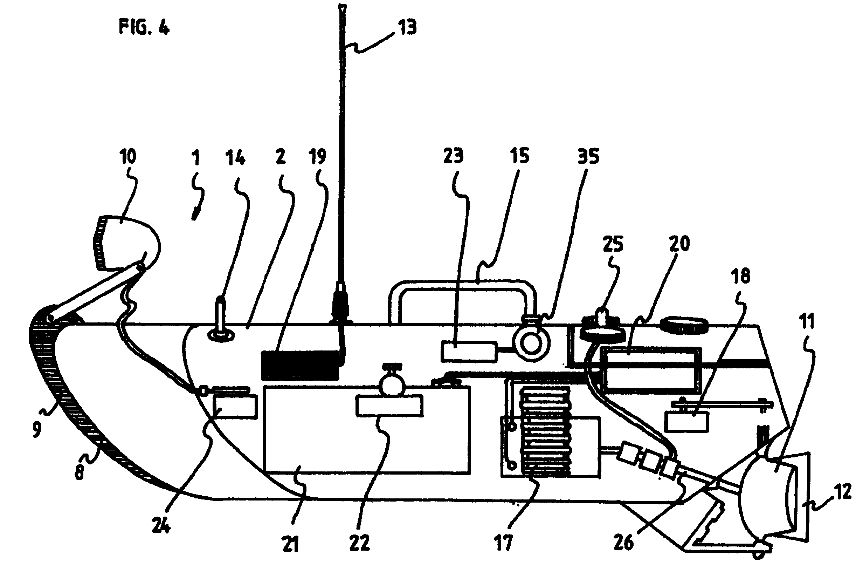

Figure 4 shows a longitudinal cross-section of the feeding boat 1. A motor 17 is placed in the hull 2, which motor can drive the screw 11 via a cardan shaft. The rudder 12 can be controlled by means of a servomotor 18. The feeding boat 1 can be controlled radiographically from the shore, in which radiographic signals are received by the antenna 13 and transmitted to a receiver 19 placed in the hull 2, for instance a four-channel FM 40 MHz receiver. Via an electronic regulator 20 these signals can be converted into control signals for operating the several parts of the feeding boat such as the motor 17, the rudder 12, the control means for (having) the containers 3 tilted etc.

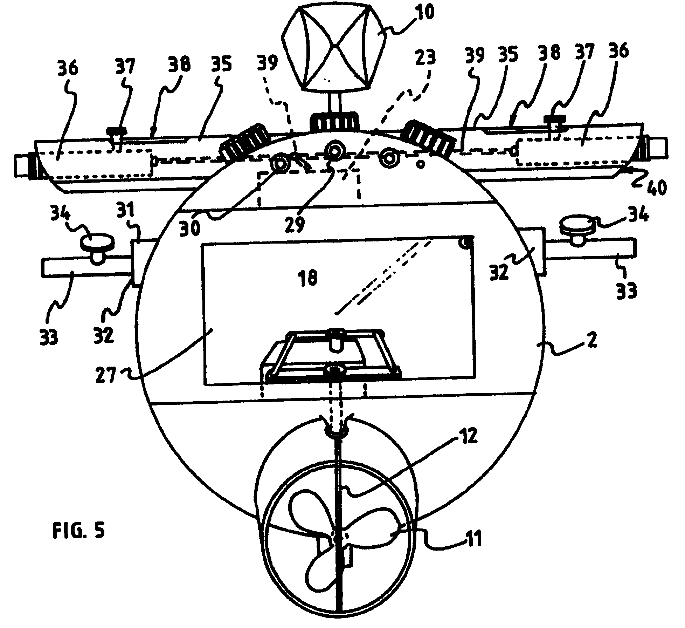

Adjacent a motor 17 a battery 21 has been placed. A possible servomotor 22 serves to be able to tilt the containers 3 about the axle with which they are connected to the hull, if such is desired. The second servomotor 23 has been arranged for controlling the cylindrical pen 36 in the tube-shaped hollow arms 35 as shown in figure 5. A third servomotor 24 serves to be able to turn the head light or bow light 10 in a desired position. At the upper side of the hull 2 a lubricating or grease nipple 25 has been arranged for lubricating the propeller shaft 26 via a line.

Figure 5 shows the rear side of the hull 2 of the feeding boat 1, which is provided with a perspex rear window 27, through which one can see the inside of the hull 2. Behind the screw 11 the rudder 12 is situated. Through the rear window 27 the servo control 18 for the rudder 12 can be seen. At the rear side on the stern of the boat furthermore a main switch 29 and a LED reference 30 belonging to the main switch have been arranged. On both sides of the hull 2 above the centre, two members 31 protruding sideways each with a stop 32 are situated, through which an axle 33 extends, of which the centre line forms the axis of rotation about which axis of rotation a container can be tilted. On the axle 33 a pen or locking pin 34 has been arranged, which serves to be able to attach a container to the axle. Furthermore near the upper side of the hull and more to the rear two tube-shaped hollow arms 35 are situated. In the cylindrical cavity of each of the arms a cylindrical pen 36 is situated in which a guide pin 37 is attached, which extends through a longitudinal opening 38 in the wall of arm 35 and is attached in the cylindrical pen 36. This longitudinal opening limits the stroke the guide pin can make. With the help of the guide pin the cylindrical pen 36 can manually be brought in the farthest slid-out position. Also a pulling cord 39 has been attached to the cylindrical pen 36, which serves to be able to bring the cylindrical pen 36 in the other farthest position with the help of the servomotor 23 (here shown schematically), because of which the container is unlocked and can be tilted about its axis of rotation. Thus this cylindrical pen 36 serves to be able to lock and unlock a container to the hull 2 of the feeding boat 1.

Each of the tube-shaped arms is obliquely truncated to the outside and thus forms a stop 40.

The figures 6 and 7 show a container 3 detached from a feeding boat. Figure 6 shows the container in side view and figure 7 shows the container in top view. At the open side 5 the container 3 is provided with several balance weights 41 on the inside which serve to balance the container in empty state such that the open side 5 of the container remains under water, so that the container can rotate freely up and down about the rotary shaft without the open side 5 emerging above the water surface.

The closed extremity of the container, the conical part 6, in shape is more or less similar to the bow of the hull and is more or less at an angle to the longitudinal axis of the container and partially emerges above the upper side of the cylindrical part of the container. The tip of the conical part 6 is provided with a bow fin 42. As a result of this design the conical part 6 will be more or less similar to the bow of the boat in each position in which the container is tilted. Because of this design the friction of each of the containers during sailing will be small in whatever position they may be placed.

Near the transition of the cylindrical part of the container 3 to the conical part 6, near the upper side of the container 3 a protrusion 43 is situated in which a tube-shaped member 44 is attached, which is concentrically provided with a cylindrical cavity 45. In the wall of the tube-shaped tube member an L-shaped recess 46 has been arranged.

Approximately in the centre of the side of the cylindrical part of the container 1 (figure 6) a bushing 47 is situated, with a cylindrical hole 48 in which hole the locking pin 32 can be accommodated. The extremity of the bushing 46 is obliquely truncated and together with the oblique truncation of the arm 35 forms a stop 40.

In order to attach a container 3 filled with food to the hull 2 the tube-shaped member 44 of the container is slid onto the axle 33 of the hull 2 until the stop 32, in which it is ensured that the pen of locking pin 34 falls in the L-shaped opening 46. Subsequently the servomotor which controls the rotary shaft 33 is operated such that the bushing 47 of the container abuts the stop 40 of the arm 35 and the locking pin is situated in the foot of the L-shaped opening 46. The cylindrical pen 36 is then manually slid into the cylindrical opening of the bushing 47 and the container filled with food is thus locked in the top position and after both containers have thus been arranged the feeding boat can be placed in the water to be sailed to a location where the food has to be discharged. There the container is unlocked by remote control with the help of the servomotor 23, because the cylindrical pen 36 is slid inwardly with the help of the pulling cord 39 inside in the arm 35. The container 3 then tilts to a position in which the food can be discharged from the open side. Possibly, with the help of the servomotor 22 - if present-the container can be tilted in the desired position. After the containers have been emptied the feeding boat can be sailed back with the containers in the position directed downwards because of which they are partially filled with water, because just above the axis of rotation a small vent opening is arranged in each container. As a result of this the feeding boat will remain very stable even in bad weather and a lot of wind and can be sailed back easily. The vent openings can possibly be made such that the size of the opening can be adjusted.

It appeared that in practice such a feeding boat is very suitable for arranging a strip of maize, there where one wants to fish, to lure the fish. The boat is also very suitable to disperse all kinds of food over a water surface, such as thick mash. This boat is also very suitable to plant live fish, which have already been attached to the line of a fishing rod. Up until now it was always cast, as a result of which the fish fell on the water surface and after a few times was no longer suitable to fish for fish of prey like pikes.

As already described, the containers 3 can very easily and rapidly be disconnected from the hull 2 so that the feeding boat and the containers can be transported separately and the containers can easily be cleansed separately. If so desired several containers can be taken along and after it has been emptied, a container can be replaced by another container.

By way of example the feeding boat may have a length of 60 cm and a width of 45 cm.

## Claims

1. Feeding boat for dispersing bait or food for fish over a water surface, which feeding boat comprises a hull and can be moved over the water surface along a desired track by means of driving means preferably by means of remote controlled steering means, which feeding boat furthermore comprises at least one compartment for storing the food, and which contents of the compartment can be discharged into the water at a desired location, **characterized in that** the compartment for storing the food or bait is formed by at least one secondary hull arranged outside of the primary hull, which secondary hull is provided with a discharge opening for direct discharge of the food or bait to the water.

2. Device according to claim 1, in which the secondary hull is connected to the primary hull for rotation about a horizontal axis.

3. Device according to claim 2, in which the discharge opening in sailing direction is situated behind the rotatable connection, in which preferably the centre of gravity of the secondary hull in the inactive position is situated behind the rotatable connection.

4. Device according to any one of the preceding claims, furthermore comprising means for holding up the secondary hull in an inactive position, in which no feeding takes place, and remote controlled unlocking means for deactivating the means for holding up.

5. Device according to any one of the preceding claims, provided with two of such secondary hulls placed on both sides of the hull for containing food, which preferably can be unlocked independently from each other.

6. Device according to claim 3, 4 or 5, in which the secondary hull in the unlocked position can be rotated freely in relation to the primary hull.

7. Device according to claim 3, 4 or 5, furthermore provided with means for locking the secondary hull(s) in several positions.

8. Device according to claim 3, 4 or 5, furthermore provided with a driving gear for the rotatable connection, to set and keep the secondary hull in a certain position in a controlled manner, independent from the speed of sailing.

9. Device according to any on of the preceding claims, in which the secondary hulls consist of a cylindrical member - preferably with oval cross-section - with a - preferably open - discharge end and a closed extremity, which tube member in the inactive position is at an angle to the hull, the discharge end being directed towards the rear side of the feeding boat.

10. Device according to claim 9, in which the -preferably conical- closed extremity substantially has a shape which more or less corresponds to the bow of a boat and which in the inactive position of the container is directed towards the front side of the boat, the closed end preferably being turned upwards in relation to the rest of the container concerned.

11. Device according to claim 9 or 10, in which in one or more feeding positions the discharge end of the secondary hull is situated below water level, preferably completely.

12. Device according to any one of the preceding claims, in which the secondary hulls each have a ventilating opening which is situated above water level, at least when the feeding boat is in the water.

13. Device according to any one of the preceding claims, in which the secondary hulls are detachable.

14. Device according to any one of the preceding claims, in which at their discharge ends the secondary hulls are provided with a weight that can be changed and selected, so that tilting is promoted and the lifting forces that are generated by the water can be compensated and the orientation of the secondary hull in the unlocked position is less subject to change.
